**Europäisches Patentamt**

**European Patent Office**

**Office européen des brevets**

(19)

(11) Veröffentlichungsnummer: **0 034 561**
**B1**

(12) ## EUROPÄISCHE PATENTSCHRIFT

(45) Veröffentlichungstag der Patentschrift:
04.05.83

(21) Anmeldenummer: **81730011.4**

(22) Anmeldetag: **03.02.81**

(51) Int. Cl.³: **H 02 K 19/22,** H 02 K 17/42,
H 02 K 1/02

(54) **Elektrische Maschine mit einem Ständerblechpaket aus kornorientierten Blechen.**

(30) Priorität: **15.02.80 DE 3006207**

(43) Veröffentlichungstag der Anmeldung:
**26.08.81 Patentblatt 81/34**

(45) Bekanntmachung des Hinweises auf die Patenterteilung:
**04.05.83 Patentblatt 83/18**

(84) Benannte Vertragsstaaten:
**AT BE CH FR GB IT LI SE**

(56) Entgegenhaltungen:
**DE-A-1 514 399**
**DE-B-1 016 358**
**DE-B-1 027 302**
**DE-C-963 802**
**FR-A-1 157 914**
**US-A-2 276 793**

(73) Patentinhaber: **SIEMENS AKTIENGESELLSCHAFT,**
**Berlin und München Wittelsbacherplatz 2,**
**D-8000 München 2 (DE)**

(72) Erfinder: **Spirk, Franz, Schuckertdamm 322,**
**D-1000 Berlin 13 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

### Elektrische Maschine mit einem Ständerblechpaket aus kornorientierten Blechen

Die Erfindung bezieht sich auf eine elektrische Maschine bei der das Ständerblechpaket zur Verringerung des Erregerstrombedarfs für den Eisenweg aus kornorientierten Blechen aufgebaut ist, bei denen im Bereich der Zähne die Vorzugsrichtung in Längsrichtung der Zähne verläuft. Eine derartige Maschine ist aus der DE-AS 1 463 978 bekannt. In dieser ist beschrieben, daß sich das Ständerblechpaket eines Turbogenerators aus kornorientierten Blechen zusammensetzt. Diese sind in ein Joch- und ein Zahnteil aufgeteilt, wobei der jeweiligen Flußrichtung entsprechend die magnetische Vorzugsrichtung des Jochteiles in Umfangsrichtung verläuft und die des Zahnteiles in Längsrichtung der Zähne. Man will auf diese Weise den Erregerstrombedarf der Maschine herabsetzen. Derartig aus einem Joch- und einem Zahnteil zusammengesetzte Bleche erfordern aber eine Verschweißung der Stoßstelle bzw. besondere Maßnahmen zur Verbindung bzw. Verklinkung beider Blechteile miteinander, damit die Übertragung des Drehmomentes nicht gefährdet ist.

Der Erfindung liegt die Aufgabe zugrunde, bei einer langsam laufenden elektrischen Maschine hoher Polzahl mit großem Bohrungsdurchmesser, wie sie für Generatoren eines Rohrturbinensatzes erforderlich sind, die mechanische Stabilität des Ständers und des Läufers zu verbessern.

Zur Lösung dieser Aufgabe weisen gemäß der Erfindung bei einer langsam laufenden elektrischen Maschine hoher Polzahl der eingangs beschriebenen Art die Bleche des Ständerblechpaketes insgesamt nur die Vorzugsrichtung in Längsrichtung der Zähne auf, und der Luftspalt ist so vergrößert, daß sich insgesamt angenähert der gleiche Erregerstrombedarf wie bei einem Ständerblechpaket aus normalen Blechen ergibt. Das Ständerblechpaket setzt sich also aus einheitlichen Blechen zusammen, die allerdings kornorientiert sind, wobei die Vorzugsrichtung in Längsrichtung der Zähne verläuft. Da ein großer Teil des Erregeraufwandes für die Magnetisierung der Ständerzähne erforderlich ist, ergibt sich dadurch eine Verringerung des Erregerstrombedarfs gegenüber einem Ständerblechpaket aus normalen Blechen. Entsprechend dieser Verringerung ist der Luftspalt der Maschine größer gewählt, so daß sich insgesamt angenähert der gleiche Erregerstrombedarf wie bei einem Ständerblechpaket aus normalen Blechen ergibt. Die Vergrößerung des Luftspaltes der Maschine hat aber den Vorteil, daß die mechanische Stabilität des Ständers und Läufers gegenüber dem Eigengewicht, dem Druck des Triebwassers und dem magnetischen Zug verbessert ist, ohne daß dafür aufwendige mechanische Maßnahmen ergriffen werden müssen. Außerdem ergibt sich noch der Vorteil, daß die Verluste im Zahnbereich verringert sind und man entsprechend die axiale Maschinenlänge verkürzen kann.

Es ist besonders zweckmäßig, die Erfindung bei einem Generator eines Rohrturbinensatzes anzuwenden, der in asynchroner Bauart ausgeführt ist. Da diese Maschinen gegenüber Maschinen synchroner Bauart einen wesentlich kleineren Luftspalt aufweisen, kann gerade hier eine Erhöhung der mechanischen Stabilität der ganzen Maschine bei gleichem cos $\varphi$ durch den größeren Luftspalt erzielt werden.

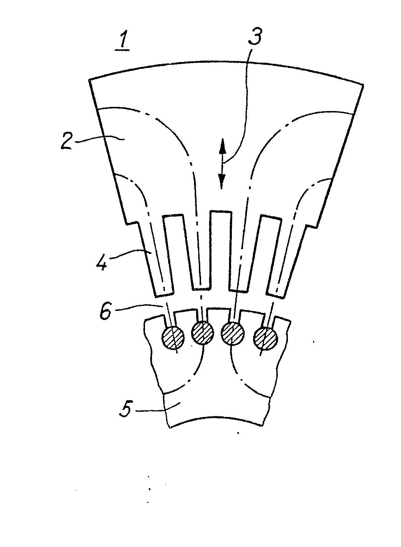

Ein Ausführungsbeispiel der Maschine ist in der Figur der Zeichnung schematisch dargestellt. Diese zeigt einen Radialschnitt durch das Blechpaket einer gemäß der Erfindung ausgebildeten Asynchronmaschine.

Der in asynchroner Bauweise ausgebildete Generator eines Rohrturbinensatzes besitzt ein Ständerblechpaket 1, dessen Bleche 2 aus kornorientierten Blechen gebildet sind, deren Vorzugsrichtung 3 in Längsrichtung der Zähne 4 verläuft. Die Bleche des Läuferblechpaketes 5 sind aus normalem Dynamoblech. Der Luftspalt 6 ist größer als bei einer asynchronen Maschine gleicher Abmessungen und gleichen Erregerstrombedarfs, da die durch die Verwendung von kornorientierten Blechen gegebene Verringerung des Erregerstrombedarfs durch eine entsprechende Vergrößerung des Luftspaltes 6 kompensiert wurde. Dieser größere Luftspalt 6 hat aber den Vorteil, daß die mechanische Stabilität der Maschine wesentlich verbessert ist. Dies ist gerade bei als Rohrgeneratoren für Leistungen über 40 MVA eingesetzte Asynchronmaschinen mit einem Bohrungsdurchmesser von 6 bis 9 m wesentlich, da diese einer großen Belastung durch das Eigengewicht, den Druck des umgebenden Triebwassers und den magnetischen Zug unterworfen sind.

**Patentansprüche**

1. Elektrische Maschine bei der das Ständerblechpaket zur Verringerung des Erregerstrombedarfs für den Eisenweg aus kornorientierten Blechen aufgebaut ist, bei denen im Bereich der Zähne die Vorzugsrichtung in Längsrichtung der Zähne verläuft, dadurch gekennzeichnet, daß bei einer langsam laufenden elektrischen Maschine hoher Polzahl die Bleche (2) des Ständerblechpaketes (1) insgesamt nur die Vorzugsrichtung (3) in Längsrichtung der Zähne (4) aufweisen und daß der Luftspalt (6) so vergrößert ist, daß sich insgesamt angenähert der gleiche Erregerstrombedarf wie bei einem Ständerblechpaket aus normalen Blechen ergibt.

2. Elektrische Maschine nach Anspruch 1, dadurch gekennzeichnet, daß die Bleche (2) mit der Vorzugsrichtung (3) in Längsrichtung der Zähne (4) das Ständerblechpaket (1) einer langsam laufenden Asynchronmaschine großen Bohrungsdurchmessers bilden, die als Generator eines Rohrturbinensatzes dient.

## Claims

1. An electrical machine wherein the required excitation current for the iron path is reduced by constructing the stator lamination stack from grainoriented sheets, in which the preferred direction in the region of the teeth runs in the longitudinal direction of the teeth, characterised in that in the case of a slow-running electrical machine with a great number of poles, the sheets (2) of the complete stator lamination stack (1), have only the preferred direction (3) in the longitudinal direction of the teeth (4) and that the air gap (6) is so large that substantially the same excitation current is required as in the case of a stator lamination pack made of standard sheets.

2. An electrical machine as claimed in claim 1, characterised in that the sheets (2) having the preferred direction (3) in the longitudinal direction of the teeth (4) form the stator lamination stack (1) of a slowrunning asynchronous machine which has a large bore diameter and serves as a generator of a tubular turbine set.

## Revendications

1. Machine électrique dans laquelle l'empilage de tôles statoriques est constitué par des tôles à grains orientés, pour réduire la consommation en courant d'excitation pour le circuit magnétique dans le fer, tôles dans lesquelles, dans la région des dents, la direction préférentielle s'étend suivant la direction longitudinale des dents, caractérisée par le fait que, dans le cas d'une machine électrique tournant lentement qui possède un nombre important de pôles, les tôles (2) de l'empilage de tôles statoriques (1) présentent globalement uniquement la direction préférentielle (3) suivant la direction longitudinale des dents (4), et l'entrefer à air (6) est augmenté de manière à obtenir globalement approximativement la même consommation en courant d'excitation que dans le cas d'un empilage de tôles statoriques constitué par des tôles normales.

2. Machine électrique suivant la revendication 1, caractérisée par le fait que les tôles (2), dont la direction préférentielle (3) s'étend suivant la direction longitudinale des dents (4), forment l'empilage de tôles statoriques (1) d'une machine asynchrone tournant lentement et présentant un diamètre de perçage important, qui sert de générateur de groupe bulbe immergé.